# DEMANDE DE BREVET EUROPEEN

(11) **EP 0 546 880 A1**
(43) Date de publication de la demande: **16.06.1993**
(21) Numéro de dépôt: 92403181.8
(22) Date de dépôt: 25.11.1992
(51) Int. Cl.: H04N 5/278

(54) **Dispositif de recopie des sous-titres d'un signal vidéo d'une zone d'image à une autre**

(30) Priorité: 09.12.1991 FR 9115226
(71) Demandeur: NOKIA CONSUMER ELECTRONICS FRANCE S.A., F-93230 Romainville (FR)
(72) Inventeur: Thevenin, Claude Gabriel Jean, F-92000 Nanterre (FR)
(74) Mandataire: Habasque, Etienne Joel Jean-François

(57) **Abrégé**

Ce dispositif de modification d'images de télévision à visualiser sur un écran d'un récepteur de télévision, chaque image comportant une zone utile d'image et au moins une zone marginale d'image, du type comportant des moyens (22, 23,24,25) d'adaptation du format d'au moins la zone utile d'image (32) au format de l'écran (31) du récepteur de télévision (30), est caractérisé en ce qu'il comporte des moyens (26) de détection dans la zone marginale d'image, d'informations relatives à des sous-titres d'image et des moyens (27,28) de recopie de ces informations de sous-titres dans la zone utile d'image (32) pour leur visualisation dans cette zone, sur l'écran.

## Description

La présente invention concerne un procédé et un dispositif de modification d'images de télévision à visualiser sur un écran d'un récepteur de télévision.

Plus particulièrement, l'invention se rapporte à un procédé et à un dispositif de modification d'images dont chacune comporte une zone utile d'image et au moins une zone marginale d'image, telles que celles qui sont visualisées sur un écran de télévision, lorsque les images se présentent sous un format CINEMASCOPE.

Il existe déjà dans l'état de la technique, différents dispositifs de modification de ces images, qui comportent des moyens d'adaptation du format d'au moins la zone utile d'image au format de l'écran du récepteur de télévision.

Ces différents dispositifs ont été développés lors des études menées sur la télévision à haute définition, pour laquelle un format d'écran de 16/9 a été préconisé par exemple par les normes européennes.

Ce format est en effet bien adapté pour la visualisation, après agrandissement et sur plein écran, de la zone utile d'image d'un film par exemple au format CINEMASCOPE, alors que dans les formats classiques 4/3 d'écrans, la zone utile d'image affichée sur l'écran est visualisée entre une bande supérieure noire et une bande inférieure noire par exemple, ces bandes formant des zones marginales d'image.

Or, ces zones marginales d'image et par exemple la zone marginale inférieure, contiennent le cas échéant, des informations relatives à des sous-titres d'image.

On conçoit que lorsqu'on agrandit au moins la zone utile d'image au format adapté pour sa diffusion sur la totalité d'un écran 16/9, Ies zones marginales disparaissent, de sorte que les informations de sous-titres ne sont plus visualisées.

Une solution à ce problème a consisté à décaler la totalité de l'image visualisée sur l'écran vers le haut ou vers le bas de l'écran, en fonction de la position de ces informations de sous-titres.

Cependant, ceci conduit à une réduction de la zone utile d'image visualisée sur l'écran et à une imperfection de la visualisation des images.

Le but de l'invention est donc de résoudre ces problèmes en proposant un procédé et un dispositif de modification des images de télévision à visualiser, qui permettent de visualiser la totalité de la zone utile d'image sur la totalité de l'écran du récepteur, tout en affichant les informations de sous-titres correspondantes.

A cet effet, l'invention a pour objet un procédé de modification d'images de télévision à visualiser sur un écran d'un récepteur de télévision, lesdites images comportant chacune une zone utile d'image et au moins une zone marginale d'image, dans lequel on adapte le format d'au moins la zone utile d'image au format de l'écran du récepteur de télévision, caractérisé en ce qu'on détecte dans la zone marginale d'image, des informations relatives à des sous-titres d'image et on recopie ces informations de sous-titres dans la zone utile d'image pour leur visualisation dans cette zone, sur l'écran.

Selon un autre aspect, l'invention a également pour objet un dispositif de modification d'image de télévision pour la mise en oeuvre du procédé décrit précédemment, du type comportant des moyens d'adaptation du format d'au moins la zone utile d'image au format de l'écran du récepteur de télévision, caractérisé en ce qu'il comporte des moyens de détection dans la zone marginale d'image, d'informations relatives à des sous-titres d'image et des moyens de recopie de ces informations de sous-titres dans la zone utile d'image pour leur visualisation dans cette zone, sur l'écran.

L'invention sera mieux comprise à l'aide de la description qui va suivre, donnée uniquement à titre d'exemple et faite en se référant aux dessins annexés, sur lesquels :
- la Fig.1 illustre la visualisation d'images au format CINEMASCOPE sur un écran au format 4/3;
- la Fig.2 illustre la visualisation d'images au format CINEMASCOPE sur un écran au format 16/9 après agrandissement;
- la Fig.3 représente un schéma synoptique d'un dispositif de modification d'images de télévision, selon l'invention; et
- la Fig.4 illustre la diffusion d'images au format CINEMASCOPE sur un format 16/9 après copie des informations de sous-titres dans la zone utile d'image.

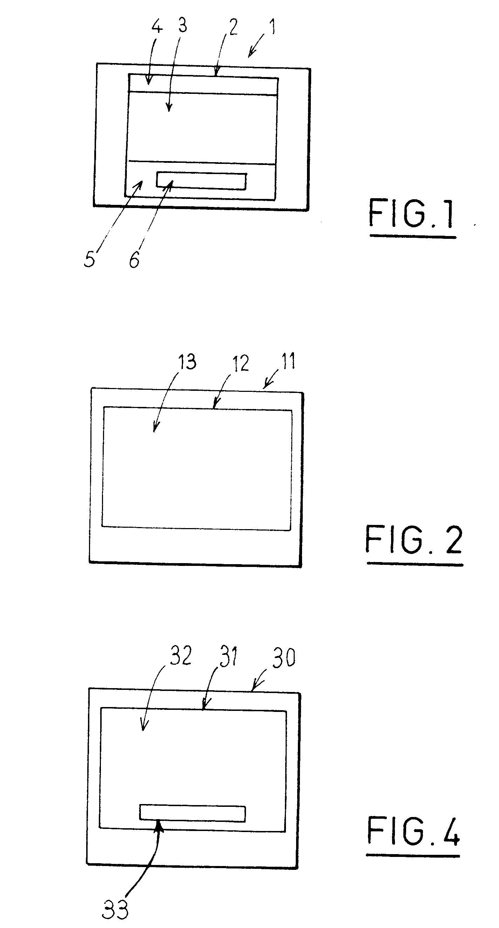

Ainsi qu'on peut le voir sur la Fig.1, un récepteur de télévision désigné par la référence générale 1 sur cette figure, comporte un écran 2 sur lequel sont visualisées des images de télévision.

La visualisation de ces images, lorsque celles-ci sont au format CINEMASCOPE, se traduit par l'apparition sur l'écran 2 d'une zone utile d'image 3, au-dessus et au-dessous de laquelle apparaissent des zones marginales d'image 4 et 5.

Ces zones marginales sont en général noires et permettent de centrer correctement la zone utile d'image sur l'écran.

Le cas échéant, des informations de sous-titres 6 sont affichées par exemple dans la zone marginale inférieure 5. Ces informations de sous-titres sont relatives aux images visualisées et correspondent par exemple à une traduction dans une langue déterminée des dialogues d'un film ou autre, diffusé en version originale.

L'un des intérêts des écrans au format 16/9, comme celui représenté sur la Fig.2, est de permettre une adaptation du format de la zone utile d'image au format de l'écran du récepteur, de manière que celle-ci soit visualisée sur la totalité de cet écran.

Sur cette figure, le récepteur de télévision est désigné par la référence générale 11, l'écran de celui-ci par la référence 12 et la zone utile d'image par la référence 13.

L'adaptation du format de la zone utile d'image au format de l'écran du récepteur, entraîne la disparition des zones marginales d'image. Cependant, cette disparition entraîne également la disparition des informations de sous-titres.

On a expliqué précédemment que la solution du décalage de l'image proposé dans l'état de la technique est imparfaite pour diverses raisons.

Ainsi qu'on l'a indiqué précédemment, le procédé et le dispositif selon l'invention permettent de résoudre ces problèmes en affichant la totalité de la zone utile d'image sur la totalité de l'écran du récepteur, tout en permettant un affichage des informations de sous-titres.

En effet, le procédé de modification d'images de télévision à visualiser, selon l'invention, consiste à détecter dans une zone marginale d'image, des informations relatives à des sous-titres d'image et à recopier ces informations de sous-titres dans la zone utile d'image pour leur visualisation dans cette zone, sur l'écran.

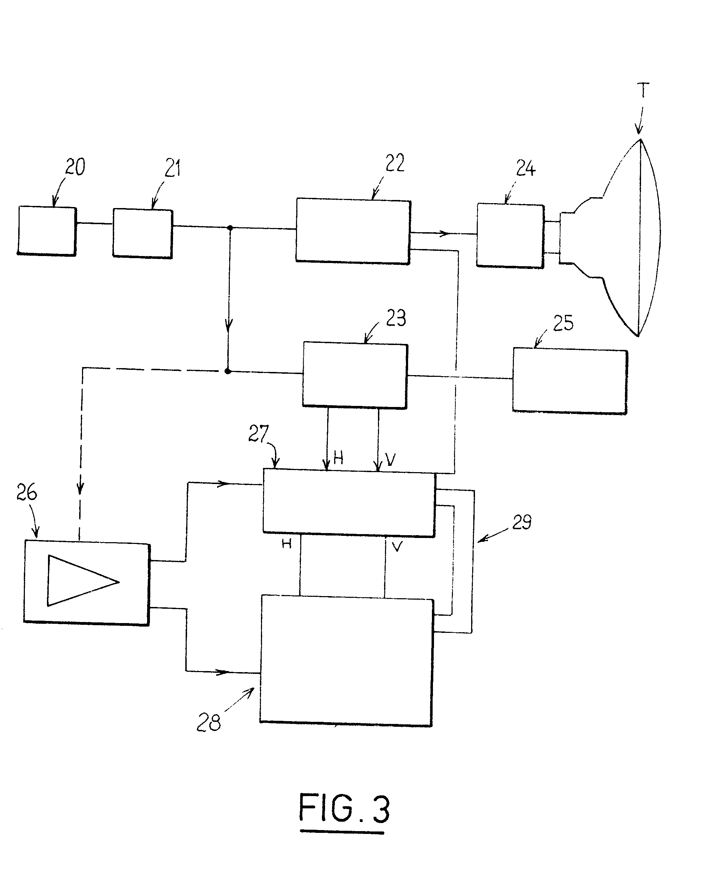

Sur la Fig.3, on a représenté un schéma synoptique d'un dispositif permettant de mettre en oeuvre ce procédé.

On reconnaît sur cette figure 3, la structure classique d'un récepteur de télévision qui comporte en entrée, un amplificateur 20 du signal reçu par exemple d'une antenne de réception et dont la sortie est reliée à des moyens de démodulation 21 permettant de délivrer un signal vidéographique composite.

Ce signal est ensuite dirigé vers des moyens 22 de décodage et de traitement du signal vidéographique et vers des moyens 23 d'extraction des signaux de synchronisation horizontaux et verticaux.

La sortie des moyens de décodage et de traitement du signal vidéographique est appliquée à des moyens d'amplification de puissance vidéographique, désignés par la référence générale 24. La sortie de ces moyens d'amplification est ensuite appliquée de manière connue aux organes correspondants du tube cathodique T du récepteur.

La sortie des moyens d'extraction des signaux de synchronisation 23 est quant à elle appliquée à des étages de commande de balayage 25 de ce même tube cathodique.

Le dispositif selon l'invention comporte également des moyens 26 de détection dans une zone marginale d'image, d'informations relatives à des sous-titres d'image.

Ces moyens de détection sont par exemple constitués par des moyens de comparaison du niveau du signal vidéographique à un niveau de référence.

La sortie de ces moyens de détection est reliée d'une part à des moyens de mémorisation pour l'acquisition et la restitution de ces informations de sous-titres, désignés par la référence générale 27 sur cette figure et à une unité de traitement d'informations 28, par exemple à microprocesseur, dont la fonction sera décrite plus en détail par la suite.

Les moyens de mémorisation 27 et l'unité de traitement 28, reçoivent également les signaux de synchronisation horizontaux et verticaux, des moyens d'extraction 23 mentionnés précédemment.

Un bus 29 de gestion des moyens de mémorisation est également prévu entre l'unité de traitement 28 et les moyens de mémorisation 27.

Le dispositif représenté sur cette figure peut fonctionner selon deux modes.

Selon le premier mode, ce dispositif analyse le signal vidéographique composite, détecte dans celui-ci la présence d'informations de sous-titres dans une zone marginale d'image, stocke ces informations et les recopie dans la zone utile d'image.

C'est ainsi par exemple que lorsque les sous- titres sont prévus dans la zone marginale supérieure d'image, cette détection se fait par analyse de chaque trame du signal vidéographique, stockage et recopie de la portion de chaque trame de ce signal, correspondant aux informations de sous-titres, dans la portion de trame correspondant à la zone utile d'image à l'endroit souhaité pour leur visualisation.

Par contre, si les informations de sous-titres sont prévues dans la zone marginale inférieure, le dispositif détecte ces informations, stocke et recopie la portion correspondante de cette trame du signal vidéographique dans la portion correspondant à la zone utile d'image de la trame suivante de ce signal.

Ces différentes opérations sont réalisées par les moyens de comparaison 26, les moyens de mémorisation 27 pour l'acquisition et la restitution de ces informations et ceci sous le pilotage de l'unité de traitement d'informations 28.

Bien entendu, cette recopie peut être effectuée avant ou après adaptation du format d'au moins la zone utile d'image au format de l'écran du récepteur de télévision, par les différents organes 22,23,24 et 25 du récepteur.

Selon le second mode, les images à visualiser peuvent être stockées sous forme numérique dans les moyens de mémorisation 27 qui sont alors formés par une mémoire vidéographique et dans ce cas, la recopie des différentes informations de sous-titres, se fait par l'unité centrale de traitement d'informations qui modifie en conséquence le contenu de cette mémoire vidéographique.

Le résultat obtenu est représenté sur la Fig.4 sur laquelle le récepteur de télévision est désigné par la référence générale 30, l'écran de celui-ci par la référence 31, la zone utile d'image par la référence 32 et les informations de sous-titres recopiées dans cette zone utile d'image, par la référence 33.

On constate que ces informations de sous-titres peuvent être par exemple recopiées dans la partie inférieure de la zone utile d'image.

Bien entendu, cette recopie peut être effectuée dans toute autre partie de la zone utile d'image.

Il va de soi également que l'unité centrale de traitement d'informations peut opérer différentes modifications sur ces informations de sous-titres, comme par exemple des modifications de couleurs, de dimensions ou autres.

Enfin, d'autres modes de réalisation du dispositif selon l'invention peuvent être envisagés et celui-ci peut s'appliquer par exemple dans des récepteurs à écran à cristaux liquides.

## Revendications

1. Procédé de modification d'images de télévision à visualiser sur un écran (31) d'un récepteur de télévision (30), chaque image comportant une zone utile d'image (32) et au moins une zone marginale d'image, dans lequel on adapte le format d'au moins la zone utile d'image au format de l'écran du récepteur de télévision, caractérisé en ce qu'on détecte dans la zone marginale d'image des informations relatives à des sous-titres d'image (33) et on recopie ces informations de sous-titres dans la zone utile d'image (32) pour leur visualisation dans cette zone, sur l'écran.

2. Dispositif de modification d'images de télévision pour la mise en oeuvre du procédé selon la revendication 1, du type comportant des moyens (22, 23,24,25) d'adaptation du format d'au moins la zone utile d'image (32) au format de l'écran (31) du récepteur de télévision (30), caractérisé en ce qu'il comporte des moyens (26) de détection dans la zone marginale d'image, d'informations relatives à des sous-titres d'image (33) et des moyens (27,28) de recopie de ces informations de sous-titres dans la zone utile d'image (32) pour leur visualisation dans cette zone, sur l'écran.

3. Dispositif selon la revendication 2, caractérisé en ce que les moyens de recopie comprennent des moyens de mémorisation (27) et une unité de traitement d'informations (28).

4. Dispositif selon la revendication 2 ou 3, caractérisé en ce que les moyens de détection et de recopie (26,27,28) sont adaptés pour analyser et modifier le signal vidéographique composite de sortie de moyens de démodulation (21) du récepteur de télévision.

5. Dispositif selon la revendication 3, caractérisé en ce que les informations d'images sont stockées sous forme numérique dans les moyens de mémorisation (27) et en ce que l'unité de traitement d'informations (28) modifie le contenu de ces moyens de mémorisation pour recopier les informations de sous-titres dans la zone utile d'image.

6. Dispositif selon l'une quelconque des revendications 2 à 5, caractérisé en ce que les moyens de détection comprennent des moyens (26) de comparaison du niveau du signal vidéographique à un niveau de référence.

7. Dispositif selon l'une quelconque des revendications 2 à 6, caractérisé en ce que les moyens de recopie (27,28) sont adaptés pour recopier les informations de sous-titres dans la zone utile d'image avant adaptation de son format au format de l'écran du récepteur de télévision.

8. Dispositif selon l'une quelconque des revendications 2 à 6, caractérisé en ce que les moyens de recopie (27,28) sont adaptés pour recopier les informations de sous-titres dans la zone utile d'image après adaptation de son format au format de l'écran du récepteur de télévision.
